(19) **Europäisches Patentamt**
**European Patent Office**
**Office européen des brevets**

(11) **EP 2 036 226 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(21) Anmeldenummer: **07730090.3**

(22) Anmeldetag: **12.06.2007**

(51) Int Cl.:
***H04B 10/17*** (2006.01)

(86) Internationale Anmeldenummer:
**PCT/EP2007/055768**

(87) Internationale Veröffentlichungsnummer:
**WO 2007/144348 (21.12.2007 Gazette 2007/51)**

(54) **VERFAHREN UND ANORDNUNG ZUR EIN- UND/ODER ABSCHALTUNG EINES RAMAN-PUMPLASERS**

METHOD AND ARRANGEMENT FOR SWITCHING A RAMAN PUMP LASER ON AND/OR OFF

PROCÉDÉ ET ARRANGEMENT DE MISE EN MARCHE ET/OU D'ARRÊT D'UN LASER À IMPULSIONS RAMAN

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.06.2006 DE 102006027415**

(43) Veröffentlichungstag der Anmeldung:
**18.03.2009 Patentblatt 2009/12**

(73) Patentinhaber: **Nokia Siemens Networks GmbH & Co. KG**
**81541 München (DE)**

(72) Erfinder:
- **GENTNER, Guido**
  **81673 München (DE)**
- **THANHÄUSER, Gerhard**
  **86415 Mering (DE)**

(56) Entgegenhaltungen:
**DE-A1- 10 216 279    US-A- 5 425 060**

EP 2 036 226 B1

## Beschreibung

Die Erfindung betrifft ein Verfahren nach dem Oberbegriff des Anspruchs 1 und eine dazugehörige Anordnung nach dem Oberbegriff des Anspruchs 7 sowie die Anwendung in einer Laserabschaltung.

In modernen optischen Netzen werden sowohl Faserverstärker als auch Raman-Verstärker verwendet, bei denen die optische Übertragungsfaser kontradirektional zum Übertragungssignal mit einer hohen optischen Leistung gepumpt wird. Der dabei auftretende quantenmechanische Effekt verstärkt das übertragene Signal, dessen Wellenlänge oberhalb der Pumpwellenlänge liegt. Dieses Konzept gestattet es, das Signal-Rausch-Verhältnis deutlich zu verbessern bzw. die verstärker-/regeneratorfreie Übertragungslänge zu erhöhen.

Durch den Einsatz von Raman-Verstärkern muss im Fall einer Unterbrechung der Faser der Raman-Pumplaser noch zuverlässiger als die Sendelaser abgeschaltet werden, um eine Gefährdung von Personen durch das aus der unterbrochenen Faser austretende Pumplicht auszuschließen.

Zur Signalisierung wird zusätzlich zu einem Wellenlängen-Multiplexsignal ein Service-Signal übertragen. Dies kann beispielsweise dem kompletten WDM-Signal aufmoduliert werden. Heute wird das Service-Signal meist in einem separaten Service-Kanal, dessen Wellenlänge meist einen größeren Wellenlängen-Abstand von den Datenkanälen hat, übertragen. Das Service-Signal wird dabei mit einem geringeren Pegel eingespeist, um es immer, also auch bei einer unterbrochenen Leitung, ohne Gefährdung von Personen übertragen zu können. Der Empfang des Service-Signals wird detektiert, als Nachweis für eine intakte Verbindung gewertet und zur Einschaltung des Raman-Pumplasers und der Sendelaser verwendet, worauf dann die Datenübertragung aufgenommen bzw. fortgesetzt wird.

Insbesondere bei maximal langen Übertragungsstrecken und bei abgeschaltetem Raman-Pumplaser ist eine Detektion des Service-Signals problematisch, wenn sein Pegel unterhalb des Rauschpegels liegt und eine Regeneration der Daten des Service-Kanals unmöglich ist.

In der Patentanmeldung WO 03/088528 A1 ist als nächstliegender Stand der Technik ein Verfahren zur Detektion eines Kontrollsignals beschrieben. Aus dem empfangenen Signal wird über einen Koppler ein geringer Leistungsanteil abgezweigt, optisch-elektrisch gewandelt, verstärkt, dann eine Spektrallinie des Kontrollsignals selektiert. Die Leistung der isolierten Spektrallinie wird bewertet und zum Einschalten bzw. Abschalten des Raman-Pumplasers verwendet wird. Der Service-Kanal wird hier so codiert, dass ein relativ hoher Anteil der Sendesignalleistung auf einer Spektrallinie konzentriert ist, die der Taktfrequenz entspricht. Hierzu wird beispielsweise die CMI-Codierung oder eine Übertragung von RZ-Impulsen verwendet.

Mit zunehmender Datenrate des Service-Kanals wird diese Lösung jedoch ineffizienter, da ein beträchtlicher Leistungsanteil des Service-Signals statt zur Informationsübertragung für die Signalleistung bei der "Taktlinie" verwendet wird. Bei dieser Art der Codierung ist mit einer "Penalty" von ca. 2,5 dB zu Rechnen, die durch entsprechend höhere Leistung des sendeseitigen Lasers bei entsprechend höherem Preis auszugleichen ist, wobei aber die zulässige Maximalleistung des Service-Signals nicht überschritten werden darf.

In der Arbeit "Low-Jitter Symbol Timing Recovery for M-ary QAM and PAM Signals" von Afshin Haghighat zur Erlangung des "Degree of Master of Applied Science" der Concordia University Montreal, Quebec, Canada, August 1998, 0-612-39476-X, Seiten 17, 18 und 45 ist die Rückgewinnung des Taktsignals durch Hochpass-Vorfilterung, Quadrierung und schmalbandige Bandpassfilterung beschrieben. Ziel ist die Wiedergewinnung des Taktssignals, zu der die höheren Frequenzanteile des Spektrums erforderlich sind, aber, bedingt durch den Hochpass, wird das Rauschen oberhalb der Nyquist-Frequenz nicht begrenzt.

Aufgabe der Erfindung ist es, ein Verfahren zur Ein- und/oder Abschaltung eines Raman-Pumplasers bei effektiveren Übertragungscodes und außerdem eine hierzu geeignete Anordnung anzugeben.

Eine Lösung der Aufgabe hinsichtlich des Verfahrens ist in Anspruch 1 angegeben, eine hierzu geeignete Anordnung im unabhängigen Anordnungsanspruch 7.

Vorteilhafte Weiterbildungen sind in den abhängigen Ansprüchen angegeben.

Es ist vorteilhaft, ein NRZ (Non Return to Zero) codiertes Service-Signal zu übertragen, das eine effektivere Nutzung der Signalleistung aufweist. Ein solches NRZ-Signal weist bei der Taktlinie eine Nullstelle auf. Die spektrale Leistungsdichte eines NRZ-Signals weist bestimme Symmetrieeigenschaften bezüglich der halben Taktfrequenz, der Nyquist-Frequenz, auf. Bei der Übertragung von Pseudo-Zufallsfolgen entsteht mit entsprechenden Symmetrieeigenschaften ein Linienspektrum, das den weiteren Betrachtungen zugrunde gelegt wird. Wird das Spektrum nach einer optisch-elektrischen Wandlung in geeigneter Weise durch einen Bandpass oder ein Bandpasseigenschaften aufweisendes Filter gefiltert, so wird das Rauschen begrenzt und wird anschließend das gefilterte Spektrum quadriert, dann wird die Energie zahlreicher Spektrallinien auf die Takt-Spektralinie, kurz Taktlinie genannt, konzentriert und dort summiert. Die Taktlinie wird schmalbandig ausgewertet, wodurch eine Erkennung des Service-Signals auch bei sehr geringem Pegel und bei einem schlechten Signal-Rausch-Verhältnis möglich ist (z.B. -9 dB bei 0 dB Rauschpegel).

Wird dem Bandpass ein regelbarer Verstärker vorgeschaltet, hat dies den einmal den Vorteil hat, dass nur ein geringer Anteil der Signalleistung ausgekoppelt zu werden braucht und andererseits den Vorteil, dass durch die Verstärkung die weitere Verarbeitung durch einen größeren Signalpegel erleichtert wird, während bei größerem Signalpegel das Ausgangssignal begrenzt wird, kurz der Arbeitsbereich vergrößert wird. Der Ausgangspegel wird etwa konstant gehalten wird, um eine möglichst konstante Schwelle für die Detektion des Service-Signals verwenden zu können.

Nach der Quadrierung erfolgt eine Selektion der generierten Takt-Spektrallinie in vorteilhafter Weise durch einen Schmalband-Empfänger, beispielsweise einen Heterodyn-Empfänger.

Eine zuverlässige Auswertung wird durch einen Vergleich der Amplitude der Takt-Spektrallinie mit einem Teil des übrigen Spektrums erreicht. Ein entsprechendes Vergleichssignal, das bei vorhandenem Service-Signal Anteile des Nutzsignals und Rauschen umfasst, kann vor der Quadrierung oder nach der Quadrierung gewonnen werden.

Ein Ausführungsbeispiel der Erfindung wird anhand von Figuren näher erläutert.

Es zeigen

Figur 1     eine Übertragungsstrecke mit einer Anordnung zur Detektion eines Service-Signals mit einer Raman- Pumplaser-Abschalteinrichtung,

Figur 2     eine prinzipielle Anordnung zur Detektion des Ser- vice-Signals,

Figur 3     eine Frequenzspektrum des demodulierten Service- Signals,

Figur 4     einen Ausschnitt des Frequenzspektrum,

Figur 5     Frequenzspektren am Ausgang eines Vorfilters und am Ausgang des Quadrierers und

Figur 6     eine Variante der Schwellwertschaltung.

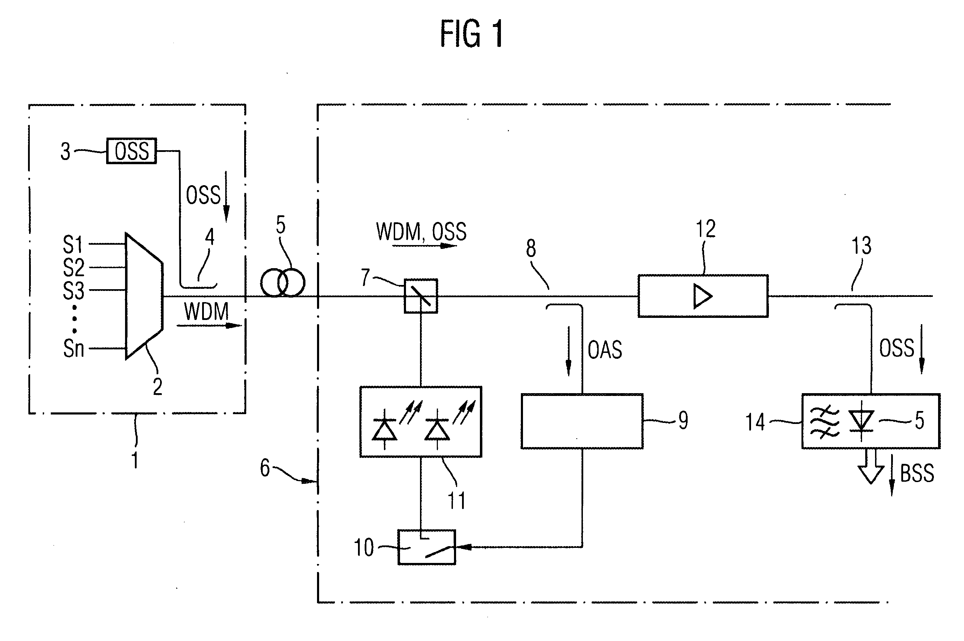

**Figur 1** zeigt einen Übertragungsabschnitt. In einer Sendeeinrichtung 1 werden in mehrere Datensignale S1 - Sn durch einen Multiplexer 2 zu einem Wellenlängen-Multiplexsignal WDM zusammengefasst. Außerdem enthält die Sendereinrichtung noch einen NRZ-Service-Signal-Generator 3, der hier ein Service-Signal OSS mit einer von den Wellenlängen der Nutzsignale abweichenden Wellenlänge erzeugt. Dieses Service-Signal wird über einen erste Koppeleinrichtung 4 (bzw. weiteren WDM-Multiplexer) mit dem Wellenlängen-Multiplex-Signal WDM frequenzmäßig kombiniert. Ebenso kann eines der Signale S1 bis Sn als Service-Signal verwendet werden oder das erste Koppeleinrichtung 4 durch einen Wellenlängen-Multiplexer ersetzt werden. Bei einer Variante kann der Koppler 4 durch einen Modulator ersetzt werden, um dem WDM-Signal das Service-Signal aufzumodulieren.

Die Sendeeinrichtung 1 ist über einen Lichtwellenleiter 5 mit einer Empfangseinrichtung (oder Regenerator) 6 verbunden. Im Betriebsfall werden das WDM-Signal WDM und das optische Service-Signal OSS übertragen. Um die Signale über eine möglichst lange Strecke ohne weiteren Zwischenverstärker übertragen zu können, ist empfangsseitig ein Raman-Pumplaser 11 angeordnet, der sein Pumpsignal RPS über einen zweiten Koppler 7 in den Lichtwellenleiter 5 entgegen der Übertragungsrichtung der Datensignale einspeist. Durch die Raman-Verstärkung in der Faser können sowohl die Datensignale als auch das Service-Signal empfangsseitig mit einem ausreichenden Signal-Rausch-Verhältnis empfangen werden.

Empfangsseitig ist ein Faserverstärker 12 vorgesehen, der die empfangenen Datensignale verstärkt. Diese werden dann über einen weiteren Streckenabschnitt übertragen oder, wenn es sich um eine Empfangs-Endeinrichtung handelt, Demodulatoren zugeführt. Das Service-Signal wird im vom Eingang oder Ausgang des Faserverstärkers ausgekoppelt und regeneriert bzw. demoduliert und als binäres Service-Signal BSS ausgegeben.

Bei einer Unterbrechung des Lichtwellenleiters 5 müssen alle energiereichen Lichtquellen abgeschaltet werden, so die Laser der Datensignale und vor allen Dingen der Raman-Pumplaser 11. Das Service-Signal OSS wird dagegen mit geringem Pegel weiter ausgesendet, um ein Kriterium zur Wiedereinschaltung bei einem reparierten Lichtwellenleiters 5 zu empfangen. Ist nun der unterbrochene Lichtwellenleiter 5 repariert und eine Verbindung zwischen Sendeeinrichtung und Empfangseinrichtung wieder hergestellt, so kann trotzdem kein sicher auswertbares Empfangssignal empfangen werden, da der Raman-Pumplaser noch ausgeschaltet ist und damit der Raman-Verstärker noch nicht aktiviert ist. Auch die Laser der Datensignale sind noch abgeschaltet, die erst auf ein Signal von einer der Empfangseinrichtung 6 zugeordneten Sendeeinrichtung hin über ein in der Gegenrichtung übertragenes zweites Service-Signal aktiviert werden (nicht dargestellt).

Im dargestellten Ausführungsbeispiel wird ein geringer Teil des empfangenen Signals über eine Auskoppel-Anordnung 8 ausgekoppelt. Das ausgekoppelte Signal OAS kann ein Teil des gesamten Signals WDM und OSS sein oder, wenn als Auskoppel-Anordnung ein WDM-Demultiplexer verwendet wird, nur das Service-Signal. Im ungestörten Betrieb wird das elektrische Service-Signal ESS vom Service-Signal-Detektor 9 problemlos erkannt und der Pumplaser bleibt eingeschaltet. Wird nun der Lichtwellenleiter unterbrochen, so wird der Service-Signal-Detektor das Fehlen des Service-Signals erkennen und den Raman-Pumplaser durch eine Laser-Ein-/Ausschaltung 10 abschalten, die Sendestation der Gegenstelle informieren und die eigenen Sendelaser abschalten. Diese Funktion kann auch vom OSS-Regenerator 14 wahrgenommen werden.

Ist eine Verbindung unterbrochen, so wird auch kein Service-Signal empfangen und der Raman-Verstärker bleibt deaktiviert. Nach Wiederherstellung der Verbindung empfängt der OSS-Detektor 9 bei maximaler Auslegung der Übertragungsstrecke das Service-Signal OSS mit äußerst geringem Pegel, da der Raman-Verstärker weiterhin abgeschaltet ist. Das Erkennen, ob das Service-Signal vorhanden ist oder nicht, ist nun das zu lösende Problem. Der Empfang des Service-Signals wird als Kriterium für eine intakte Verbindung gewertet und genutzt, um den Raman-Pumplaser 11 zu aktivieren. Der aktivierte Raman-Verstärker bewirkt, dass die Verstärkung wesentlich erhöht wird und das Service-Signal OSS vom OSS-Regenerator in ein binäres elektrisches Datensignal BSS umgesetzt wird, das wiederum ausgewertet wird, z.B. zum Einschalten der eigenen Sendelaser und zum Übertragen von entsprechender Service-Information, die wiederum in der Gegenstelle 1 die Laser für die Datensignale S1 bis Sn aktiviert usw.

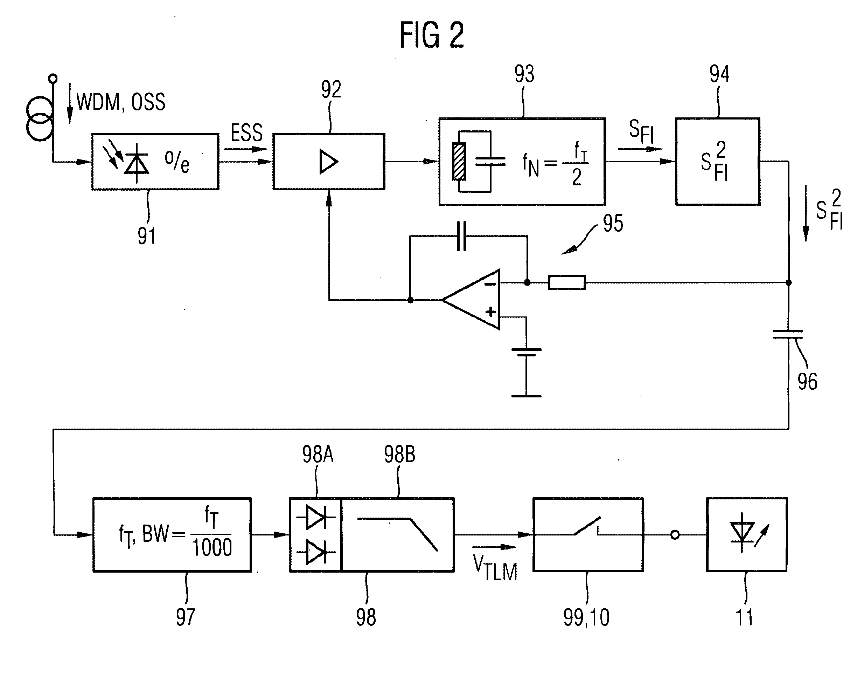

In **Figur 2** ist der OSS-Detektor in Form von Blockschaltbildern dargestellt. Das empfangene optische Service-Signal OSS ist beispielsweise amplitudenmoduliert. Es wird einem Demodulator/optisch-elektrischen Wandler 91 (Photodiode) zugeführt, der es in ein elektrisches Service-Signal ESS umsetzt. Dieses wird linear zunächst verstärkt und dann einem Bandpass 93 geringer Güte zugeführt. Dessen Ausgangs-Spektrum wird einem Quadrierer 94 zugeführt und durch diesen derart umgesetzt, das alle symmetrisch zur Nyquist-Frequenz liegenden Spektrallinien (teilweise) in eine Taktlinie TL mit der Taktfrequenz $f_T$ umgesetzt werden und sich dort leistungsmäßig addieren. Die so generierte Taktlinie TL wird, über eine Kapazität 96 entkoppelt, einem Schmalbandempfänger 97 zugeführt, dann über eine Amplituden-Messeinrichtung 98 mit einem Mehrweggleichrichter 98A gleichgerichtet, in einem Tiefpass 98B in einen Mittelwert umgesetzt und als Service-Signal-Spannung $V_{TLM}$ einer Schwellwertschaltung 99,10 zugeführt, die die Laser-Ein-/Ausschaltung 10 beinhaltet und bei Empfang eines Service-Signals über den Pump-Laser 11 aktiviert. Die Nutzsignale werden durch Filterung aussortiert und brauchen nicht weiter beachtet werden.

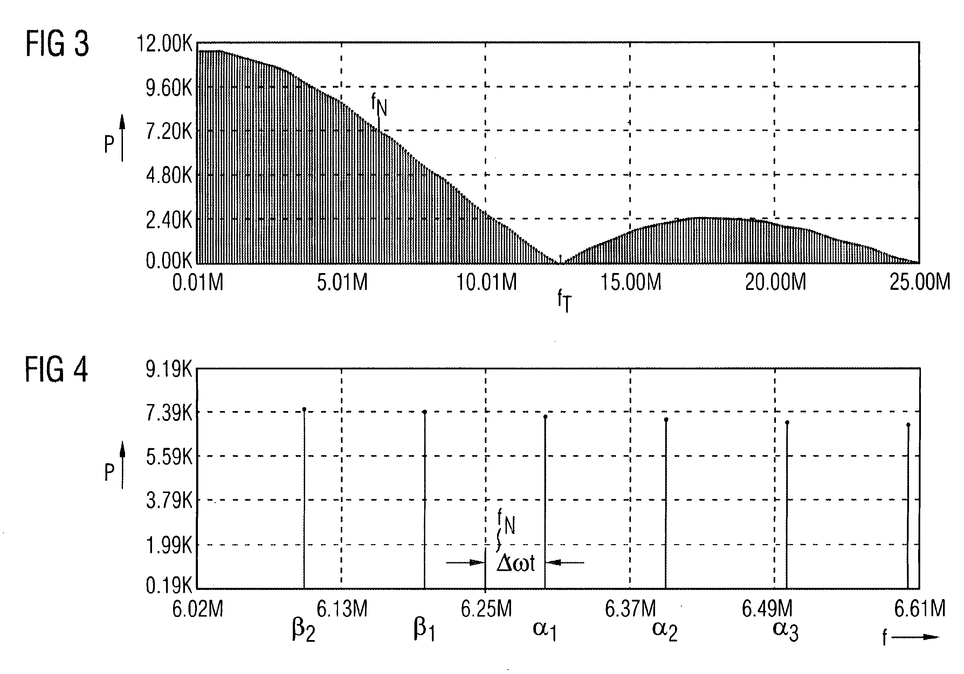

Die Funktion des OSS-Detektors soll nun detaillierter erläutert werden. **Figur 3** zeigt die Hüllkurve von Spektrallinien des Service-Signals OSS am Beispiel einer $2^7 - 1$ NRZ-Pseudo-Zufallsfolge. Das Spektrum weist eine Nullstelle der Leistung P bei der Taktfrequenz $f_T$ auf, auch die Nyquist-Frequenz $f_N$ ist nicht vertreten.

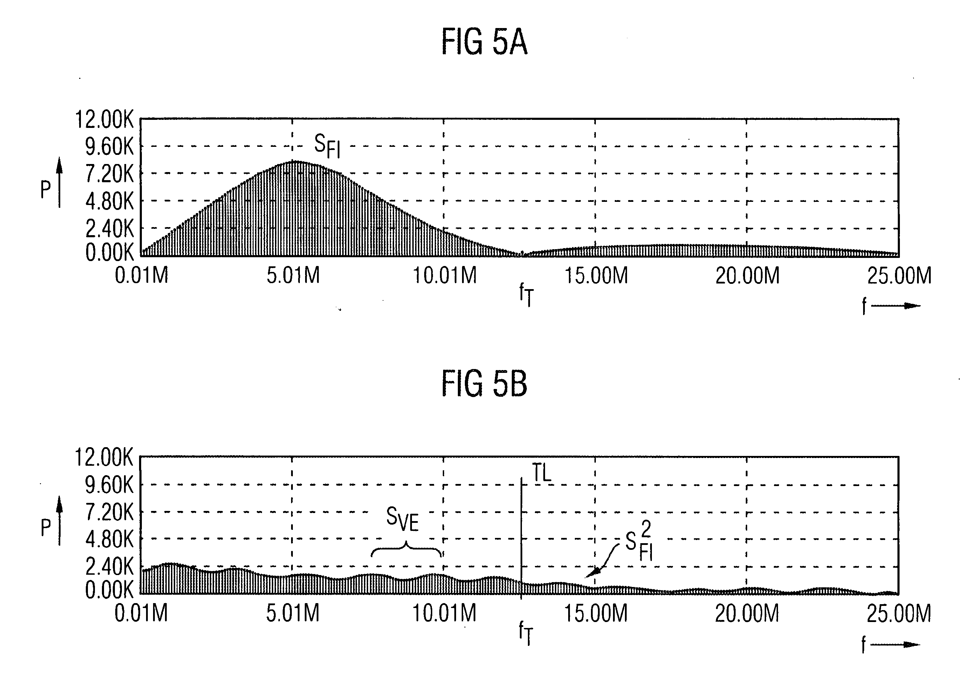

Die **Figur 4** zeigt einen frequenzmäßig gedehnten Ausschnitt aus der Umgebung der Nyquist-Frequenz. Die Spektrallinien weisen sowohl unterhalb als auch oberhalb der Nyquist-Frequenz einen symmetrischen gleichen Abstand auf. Dieses ermöglicht, wie im Folgenden dargestellt ist, eine hohe Spektralkomponente, die Taktlinie TL bei der Taktfrequenz $f_T$, zu generieren. Nach der Verstärkung erfolgt zunächst eine Umformung der Einhüllenden durch den Bandpass 93, der ein Signalspektrum $S_{FI}$ abgibt, dessen Einhüllende etwa symmetrisch zur Nyquist-Frequenz $f_N$ (halbe Taktfrequenz) verläuft. An dessen Ausgang liegt ein Spektrum $S_{FI}$ gemäß **Figur 5a** an, das etwa symme-trisch zu beiden Seiten der Nyquist-Frequenz abfällt. Dieses Signalspektrum wird dem Quadrierer zugeführt und quadriert. Am Ausgang des Quadrierers erhält man das Spektrum $(S_{FI})^2$, bei dem die Taktlinie TL mit großem Pegelunterschied zu den verbleibenden anderen Spektralanteilen auftritt. Die Funktion des Quadrierers wird nun genauer betrachtet. Stellvertretend für alle Spektrallinien $\alpha 1, \alpha 2, \alpha 3, ...$ und $\beta 1, \beta 2, ...$ wird ein symmetrisch zur Nyquist-Frequenz $f_N$ liegendes Paar Spektrallinien, im folgenden mit $\alpha$ und $\beta$ bezeichnet, herausgegriffen, das dem Quadrierer zugeführt wird.

Die Multiplikation ergibt:

$$(1) \quad (\sin \alpha + \sin \beta)^2 = \sin^2 \alpha + 2 \sin \alpha \times \sin \beta + \sin^2 \beta)$$

Es soll nun der mittlere Term betrachtet werden. Durch Umformung erhält man aus (1) Gleichung

$$(2) \quad 2 \sin \alpha \times \sin \beta = [\cos (\alpha-\beta) - \cos (\alpha+\beta)]$$

mit

$$(3) \quad \alpha = \omega_N t + \Delta\omega t, \quad \beta = \omega_N t - \Delta\omega t; \quad \omega = 2\pi f$$

eingesetzt in Gleichung (2) ergibt sich:

$$(4) \quad \cos (\alpha-\beta) - \cos(\alpha+\beta)$$
$$= \cos (\omega_N t + \Delta\omega t - \omega_N t + \Delta\omega t) - \cos (\omega_N t + \Delta\omega t + \omega_N t - \Delta\omega t)$$
$$= \cos 2\Delta\omega t - \mathbf{\cos 2\omega_N t}$$

Der letzte Term des Ergebnisses, **$\cos 2\omega_N t$,** ergibt jeweils die "Taktlinie" (Spektrallinie bei der Taktfrequenz $f_T$) für sämtliche Paare der Spektral-Linien $\alpha$, $\beta$, deren Leistungen sich addieren, sodass sich die Taktlinie bei $f_T$ mit großem Pegel aus den restlichen Spektrallinien heraushebt, die den übrigen Termen entsprechen. Zu ergänzen ist noch, dass das Rauschen bekannterweise unkorreliert ist, sodass die entsprechenden Spektralanteile bezüglich der Nyquist-Frequenz unkorreliert sind und deshalb nur einen geringeren Beitrag zum störenden Anteil ergeben. Nur so ist es möglich, das Vorhandensein eines Service-Signals trotz einer Rauschleistung vom mehrfachen der Signalleistung zu erkennen. Diese Betrachtung erlaubt es auch, eine sinnvolle Bandbreite des Bandpasses, bzw. der Güte eines als Filter verwendeten Schwingkreises zu bemessen. Einerseits soll eine möglichst breitbandige Korrelation zwischen den Spektrallinien vorgenommen werden, andererseits soll die Rauschbandbreite reduziert werden. Um das Signal-Rauschverhältnis bzw. die Zahl der genutzten Taktlinien zur Bandbreite zu optimieren, sollte bei einem (Parallel-) Schwingkreis die Güte etwa zwischen 0,75 und 2 liegen. Eine Güte von 1 ist etwa das Optimum und bewirkt etwa eine Rauschbandbreite von 0,75 $f_T$.

Nach der Quadrierung, das Spektrum $(S_{FI})^2$ ist in **Figur 5b** dargestellt, wird die Takt-Spektrallinie durch möglichst schmalbandige Filterung selektiert. Die Bandbreite kann theoretisch nahezu beliebig gering gemacht werden und so das Rauschsignal gegenüber der Taktlinie absenken. Die Schmalbandfilterung kann beispielsweise mit Hilfe eines Superheterodyn-Empfängers z.B. mit einer Bandbreite BW = $f_T$/1000 vorgenommen werden. Natürlich muss auch die Frequenzkonstanz des Service-Signal-Trägers berücksichtigt werden. Durch Gleichrichtung mit anschließender Filterung durch den Tiefpass 98B wird aus der Taktlinie ein Gleichspannungssignal, z.B. ein langfristiger Mittelwert $ESS_M$, gewonnen, dessen Amplitude über die Schwellwertschaltung 99,10 den Pumplaser 11 steuert. Die Schwellwertschaltung weist im allgemeinen eine Hysterese auf, um unnötiges Schalten während der Übergänge zwischen Empfang/kein Empfang des Service-Signals zu vermeiden.

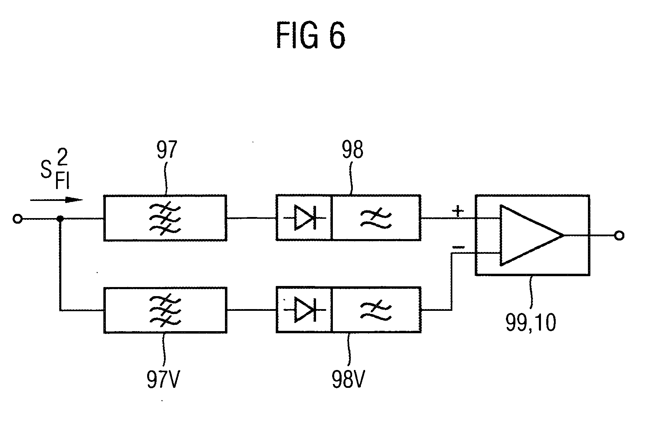

Eine besonders geeignete Schwellwertschaltung ist in **Figur 6** dargestellt, bei der Empfindlichkeit und/oder Zuverlässigkeit nochmals erhöht werden. Den beiden Signaleingängen eines als Schwellwertschaltung 99,10 verwendeten Differenzverstärkers wird einmal der aus der Taktlinie gewonnene Mittelwert $V_{TLM}$ zugeführt, andererseits eine Vergleichsspannung VE, die aus einem Vergleichs-Spektralbereich $S_{VE}$ (Figur 5b) des übrigen Spektrums durch einen (breiteren) Bandpass 97V (oder einen breitbandigen frequenzselektiven Verstärker) selektiert und durch eine weitere Amplituden-Messeinrichtung 98V mit Gleichrichter und Tiefpassfilter gewonnen wird. Die Schaltung wird so dimensioniert, dass bei einem vorhandenen Service-Signal die aus der Taktlinie gewonnene Service-Signal-Spannung $V_{TLM}$ erheblich oberhalb der Vergleichsspannung VE liegt, und bei einem fehlenden Service-Signal, wenn praktisch nur Rauschen oder Reflexionen des Pumplasers empfangen werden, die Vergleichsspannung erheblich über der Service-Signal-Spannung $V_{TLM}$ liegt.

## Patentansprüche

1. Verfahren zur Ein- und/oder Abschaltung eines Raman-Pumplasers (RPL) durch Erkennen eines modulierten optischen Service-Signals (OSS), das sendeseitig eingespeist, dann zusammen mit einem Nutzsignal übertragen und empfangsseitig durch optisch-elektrische Umsetzung in ein elektrisches Service-Signal (ESS) umgesetzt wird, dessen Amplitude zur Einschaltung und/oder Abschaltung des Raman-Pumplasers (11) ausgewertet wird,
**dadurch gekennzeichnet,**
**dass** als optisches Service-Signal (OSS) NRZ-modulierte binäre Daten übertragen werden,
**dass** empfangsseitig das optische Service-Signal (OSS) demoduliert und durch optisch-elektrisch Wandlung in ein elektrisches NRZ codiertes Service-Signal (ESS) umgesetzt wird, dass symmetrisch zur Nyquist-Frequenz ($f_N$) des elektrischen Service-Signals (ESS) ein Signalspektrum ($S_{FI}$) mit mehreren symmetrisch zu der Nyquist-Frequenz ($f_N$) liegenden Spektrallinien ($\alpha_1$, $\beta_1$; ...) herausgefiltert wird,
**dass** das gefilterte Signalspektrum ($S_{FI}$) des elektrischen Service-Signals (ESS) quadriert wird und
**dass** aus dem quadrierten Signalspektrum ($S_{FI}{}^2$) eine Taktlinie (TL) bei der Taktfrequenz ($f_T$) des elektrischen Service-Signals (ESS) herausgefiltert wird,
deren Amplitude zur Erkennung des Service-Signals (OSS) ausgewertet wird.

2. Verfahren nach Anspruch 1,
**dadurch gekennzeichnet,**
**dass** das optische Service-Signal (OSS) in einem separaten Service-Kanal mit eigener Wellenlänge übertragen wird.

3. Verfahren nach Anspruch 1,
**dadurch gekennzeichnet,**
**dass** sendeseitig das Service-Signal (ESS) Nutzsignalen (S1 - Sn) aufmoduliert wird.

4. Verfahren nach Anspruch 1,
**dadurch gekennzeichnet,**
**dass** das elektrische Service-Signal (ESS) empfangsseitig linear verstärkt wird.

**5.** Verfahren nach Anspruch 1,
**dadurch gekennzeichnet,**
**dass** eine Bandpass-Filterung des elektrischen Service-Signals (ESS) erfolgt.

**6.** Verfahren nach Anspruch 1,
**dadurch gekennzeichnet,**
**dass** eine schmalbandige Selektion der Taktlinie (TL) des elektrischen Service-Signals (ESS) erfolgt.

**7.** Anordnung zur Ein- und/oder Abschaltung eines Raman-Pumplasers (11) durch Erkennen eines modulierten optischen Service-Signals (OSS), das sendeseitig eingespeist, dann zusammen mit einem Nutzsignal übertragen und empfangsseitig durch optisch-elektrische Umsetzung in ein elektrisches Service-Signal (ESS) umgesetzt wird, dessen Amplitude zur Einschaltung und/oder Abschaltung des Raman-Pumplasers (11) ausgewertet wird,
**dadurch gekennzeichnet,**
**dass** sendeseitig ein NRZ-Service-Signal-Generator (3) angeordnet ist,
**dass** einem ersten Koppelelement (4) ein WDM-Signal (WDM) und das optische Service-Signal (OSS) zugeführt werden, die über einen Wellenleiter (5) übertragen werden,
**dass** empfangsseitig ein Auskoppelelement (8) vorgesehen ist, von dem einem Service-Signal-Detektor (9) ein ausgekoppeltes Signal (OAS) zugeführt wird,
**dass** der Service-Signal-Detektor (9) eine Reihenschaltung eines Demodulators/optoelektrischen Wandlers (91), eines linearen Verstärkers (92), eines Bandpasses (93), eines Quadrierers (94), einer Filtereinheit (97), einer Amplituden-Messeinrichtung (98) und einer Schwellwertschaltung (99) mit einer Laser-Ein-/Abschalteinrichtung (10) enthält.

**8.** Anordnung nach Anspruch 7,
**dadurch gekennzeichnet,**
**dass** als Bandpass (93) ein Schwingkreis der Güte 0,75 - 2 verwendet wird.

**9.** Anordnung nach Anspruch 7,
**dadurch gekennzeichnet,**
**dass** als Auskoppelelement (8) ein Wellenlängen-Multiplexer oder ein Splitter angeordnet ist.

**10.** Anordnung nach Anspruch 9,
**dadurch gekennzeichnet,**
**dass** das Auskoppelelement (8) vor einem optischen Verstärker (12) eingefügt ist.

**Claims**

**1.** Method for switching a Raman pump laser (RPL) on and/or off by detecting a modulated optical service signal (OSS) which is fed in at the transmitting end, is then transmitted together with a useful signal and is converted at the receiving end, by means of optoelectrical conversion, into an electrical service signal (ESS) whose amplitude is evaluated in order to switch the Raman pump laser (11) on and/or off,
**characterized**
**in that** NRZ-modulated binary data are transmitted as the optical service signal (OSS),
**in that** the optical service signal (OSS) is demodulated at the receiving end and is converted into an electrical NRZ-coded service signal (ESS) by means of optoelectrical conversion,
**in that** a signal spectrum ($S_{FI}$) having a plurality of spectral lines ($\alpha_1$, $\beta_1$; ...) which are symmetrical with respect to the Nyquist frequency ($f_N$) is filtered out in a manner symmetrical with respect to the Nyquist frequency ($f_N$) of the electrical service signal (ESS),
**in that** the filtered signal spectrum ($S_{FI}$) of the electrical service signal (ESS) is squared, and
**in that** a clock line (TL) at the clock frequency ($f_T$) of the electrical service signal (ESS) is filtered from the squared signal spectrum ($S_{FI}^2$),
the amplitude of said clock line being evaluated in order to detect the service signal (OSS).

**2.** Method according to Claim 1,
**characterized**
**in that** the optical service signal (OSS) is transmitted in a separate service channel having its own wavelength.

**3.** Method according to Claim 1,
**characterized**
**in that** the service signal (ESS) is modulated onto useful signals (S1 - Sn) at the transmitting end.

**4.** Method according to Claim 1,
**characterized**
**in that** the electrical service signal (ESS) is linearly amplified at the receiving end.

**5.** Method according to Claim 1,
**characterized**
**in that** the electrical service signal (ESS) is subjected to bandpass filtering.

**6.** Method according to Claim 1,
**characterized**
**in that** the clock line (TL) of the electrical service signal (ESS) is subjected to narrowband selection.

**7.** Arrangement for switching a Raman pump laser (11) on and/or off by detecting a modulated optical service signal (OSS) which is fed in at the transmitting end, is then transmitted together with a useful signal and is converted at the receiving end, by means of optoelectrical conversion, into an electrical service signal (ESS) whose amplitude is evaluated in order to switch the Raman pump laser (11) on and/or off,
**characterized**
**in that** an NRZ service signal generator (3) is arranged at the transmitting end,
**in that** a WDM signal (WDM) and the optical service signal (OSS), which are transmitted by means of a waveguides (5), are supplied to a first coupling element (4), in that an extraction element (8), from which an extracted signal (OAS) is supplied to a service signal detector (9), is provided at the receiving end,
**in that** the service signal detector (9) contains a series circuit comprising a demodulator/optoelectrical converter (91), a linear amplifier (92), a bandpass filter (93), a squaring element (94), a filter unit (97), an amplitude-measuring device (98) and a threshold value circuit (99) having a laser switching-on/switching-off device (10).

**8.** Arrangement according to Claim 7,
**characterized**
**in that** a resonant circuit with a Q-factor of 0.75 - 2 is used as the bandpass filter (93).

**9.** Arrangement according to Claim 7,
**characterized**
**in that** a wavelength-division multiplexer or a splitter is arranged as the extraction element (8).

**10.** Arrangement according to Claim 9,
**characterized**
**in that** the extraction element (8) is inserted upstream of an optical amplifier (12).


**Revendications**

**1.** Procédé de mise en marche et/ou d'arrêt d'un laser à impulsions Raman (RPL) par reconnaissance d'un signal de service optique modulé (OSS) qui est injecté côté émission, puis est transmis conjointement avec un signal utile et est converti, côté réception, par conversion opto-électrique en un signal de service électrique (ESS) dont l'amplitude est évaluée aux fins de la mise en marche et/ou de l'arrêt du laser à impulsions Raman (11),
**caractérisé en ce que**
sont transmises, en tant que signal de service optique (OSS), des données binaires modulées NRZ,
le signal de service optique (OSS) est démodulé côté réception et est converti, par conversion opto-électrique, en un signal de service électrique codé NRZ (ESS),
symétriquement par rapport à la fréquence de Nyquist ($f_N$) du signal de service électrique (ESS), un spectre de signal ($S_{FI}$) avec plusieurs lignes spectrales ($\alpha_1$, $\beta_1$, ...) situées symétriquement par rapport à la fréquence de Nyquist ($f_N$) est filtré,
le spectre de signal filtré ($S_{FI}$) du signal de service électrique (ESS) est élevé au carré et une ligne d'horloge (TL) est filtrée hors du spectre de signal élevé au carré ($S_{FI}^2$) à la fréquence d'horloge ($f_T$) du signal de service électrique (ESS),

dont l'amplitude est évaluée aux fins de la reconnaissance du signal de service (OSS).

2.  Procédé selon la revendication 1, **caractérisé en ce que** le signal de service optique (OSS) est transmis dans un canal de service séparé avec une propre longueur d'onde.

3.  Procédé selon la revendication 1, **caractérisé en ce que**, côté émission, le signal de service (ESS) est modulé sur des signaux utiles (S1 - Sn).

4.  Procédé selon la revendication 1, **caractérisé en ce que** le signal de service électrique (ESS) est amplifié linéairement côté réception.

5.  Procédé selon la revendication 1, **caractérisé en ce qu'**un filtrage passe-bande du signal de service électrique (ESS) est effectué.

6.  Procédé selon la revendication 1, **caractérisé en ce qu'**une sélection bande étroite de la ligne d'horloge (TL) du signal de service électrique (ESS) est effectuée.

7.  Arrangement de mise en marche et/ou d'arrêt d'un laser à impulsions Raman (11) par reconnaissance d'un signal de service optique modulé (OSS) qui est injecté côté émission, puis est transmis conjointement avec un signal utile et est converti, côté réception, par conversion opto-électrique en un signal de service électrique (ESS) dont l'amplitude est évaluée aux fins de la mise en marche et/ou de l'arrêt du laser à impulsions Raman (11),
    **caractérisé en ce que**
    un générateur de signaux de service NRZ (3) est situé côté émission,
    un signal WDM (WDM) et le signal de service optique (OSS), lesquels sont transmis via un guide d'ondes (5), sont envoyés sur un premier élément de couplage (4),
    un élément de découplage (8) est prévu, côté réception, par lequel un signal découplé (OAS) est envoyé sur un détecteur de signaux de service (9),
    le détecteur de signaux de service (9) comporte un montage en série composé d'un démodulateur / convertisseur opto-électrique (91), d'un amplificateur linéaire (92), d'un passe-bande (93), d'un élévateur au carré (94), d'une unité de filtrage (97), d'un dispositif de mesure d'amplitude (98) et d'un circuit à valeur seuil (99) avec un dispositif de mise en marche / d'arrêt de laser (10).

8.  Arrangement selon la revendication 7, **caractérisé en ce qu'**est utilisé, en tant que passe-bande (93), un circuit oscillant avec un facteur Q de 0,75 - 2.

9.  Arrangement selon la revendication 7, **caractérisé en ce qu'**est disposé, en tant qu'élément de découplage (8), un multiplexeur en longueur d'onde ou un séparateur.

10. Arrangement selon la revendication 9, **caractérisé en ce que** l'élément de découplage (8) est inséré en amont d'un amplificateur optique (12).

# FIG 1

EP 2 036 226 B1

FIG 2

**FIG 3**

**FIG 4**

FIG 5A

FIG 5B

# FIG 6

$S_{FI}^{2}$

97

98

97V

98V

+

−

99,10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03088528 A1

**In der Beschreibung aufgeführte Nicht-Patentliteratur**

- **Arbeit.** Low-Jitter Symbol Timing Recovery for M-ary QAM and PAM Signals. *Degree of Master of Applied Science,* August 1998, 17, 18, 45